(19) Europäisches Patentamt
European Patent Office
Office européen des brevets

(11) **EP 1 737 087 A2**

(12) **EUROPEAN PATENT APPLICATION**

(43) Date of publication:
27.12.2006 Bulletin 2006/52

(51) Int Cl.:
*H01S 3/067* (2006.01)    *H04J 14/02* (2006.01)
*H04B 10/18* (2006.01)

(21) Application number: 06002745.5

(22) Date of filing: 10.02.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 22.06.2005 JP 2005182425

(71) Applicant: FUJITSU LIMITED
Kawasaki-shi,
Kanagawa 211-8588 (JP)

(72) Inventors:
• Shukunami, Norifumi
c/o Fujitsu Limited
Kawasaki-shi
Kanagawa 211-8588 (JP)
• Inagaki, Shinya
c/o Fujitsu Limited
Kawasaki-shi
Kanagawa 211-8588 (JP)

(74) Representative: HOFFMANN EITLE
Patent- und Rechtsanwälte
Arabellastrasse 4
81925 München (DE)

(54) **Optical amplifier comprising an optical fibre**

(57)     An optical amplifier that improves the quality of wavelength division multiplex (WDM) transmission by reducing four-wave mixing. An optical fiber (11) has positive chromatic dispersion in a signal band and is used as an optical amplification medium for amplifying a wavelength division multiplex (WDM) signal. An excitation section (12) inputs excitation light to the optical fiber. In order to actualize mismatching of phases of optical signals with different wavelengths to be propagated, the optical fiber has positive chromatic dispersion in a signal band by which there is a great difference between a signal frequency, being a frequency of a signal to be amplified, and a zero-dispersion frequency, being a frequency at which chromatic dispersion is zero. As a result, the optical fiber functions as an optical amplification medium in which four-wave mixing is suppressed.

**10** OPTICAL AMPLIFIER

**13** MULTIPLEXING SECTION

**11** OPTICAL FIBER (WITH POSITIVE CHROMATIC DISPERSION)

WDM SIGNAL LIGHT

EXCITATION LIGHT

AMPLIFIED WDM SIGNAL LIGHT IN WHICH FOUR-WAVE MIXING IS REDUCED

**12** EXCITATION SECTION

FIG. 1

EP 1 737 087 A2

**Description**

BACKGROUND OF THE INVENTION

(1) Field of the Invention

This invention relates to an optical amplifier and an optical fiber, more particularly, to an optical amplifier for amplifying an optical signal and an optical fiber which functions as an optical amplification medium for amplifying an optical signal.

(2) Description of the Related Art

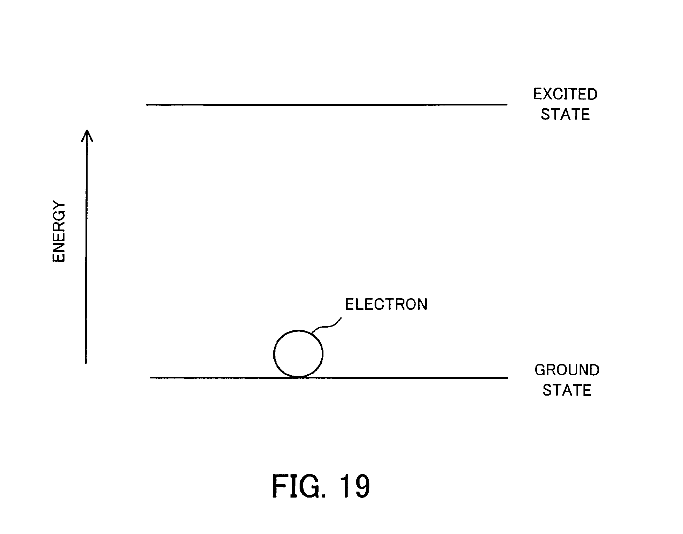

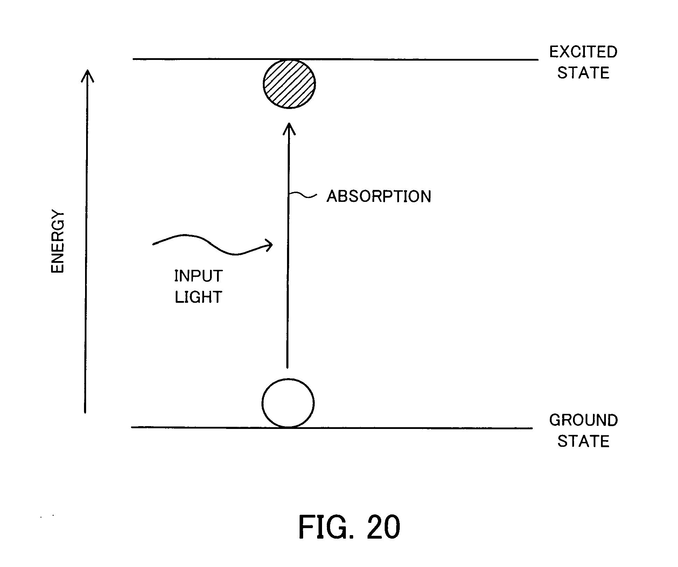

It is hoped that more advanced services will be provided via optical communication networks. Wavelength division multiplexing (WDM) begins to be widely introduced as an optical transmission technique. WDM multiplexes a plurality of optical signals with different wavelengths into a single optical fiber.
With WDM, wavelength division multiplex signals containing a plurality of wavelengths are amplified and transmitted in long-haul trunk systems by utilizing wide-band amplification characteristics of optical amplifiers and metro ring networks, for example, are built in cities by their wavelength routing functions.
Optical amplifiers are of several types. For example, there are rare-earth-doped fiber amplifiers, semiconductor optical amplifiers (SOAs), and optical fiber Raman amplifiers. Rare-earth elements, such as erbium (Er), thulium (Tm), and praseodymium (Pr), are used for fabricating rare-earth-doped fiber amplifiers. Erbium-doped fiber amplifiers amplify optical signals with wavelengths of 1,525 to 1,625nm, thulium-doped fiber amplifiers amplify optical signals with wavelengths of 1,480 to 1,510nm, and praseodymium-doped fiber amplifiers amplify optical signals with a wavelength of 1,300nm.
Erbium-doped fiber amplifiers (EDFAs) using an erbium-doped fiber (EDF) in which a core of the optical fiber is doped with erbium, being a rare-earth element, as an optical amplification medium are used in WDM systems most commonly of them.
With EDFAs, an EDF through which an optical signal travels is irradiated with excitation light and the level of the optical signal is amplified by stimulated emission caused by the irradiation.
An overview of a principle underlying optical amplification will now be given. Fig. 19 shows energy levels. The energy states of an electron (atom) include a ground state and an excited state. The energy of the electron (atom) in the ground state is lowest. The energy of the electron (atom) in the excited state is higher than that in the ground state (there may be more than one level in the excited state, but in this example it is assumed that there is a two-level system including the ground state and one excited state). An energy level indicates what energy state the electron is in with the ground state as reference.
There are absorption, spontaneous emission, and induced emission as transition processes of an electron (transition processes between the energy states of an electron). Fig. 20 shows absorption. Usually an electron is in the most stable ground state in which its energy is low. However, when light is inputted to a substance such as an optical fiber, an electron in the substance absorbs the energy of the light inputted and makes the transition to a state in which its energy is higher (making the transition to a higher level is referred to as excitation (pumping)). This transition process is referred to as absorption.

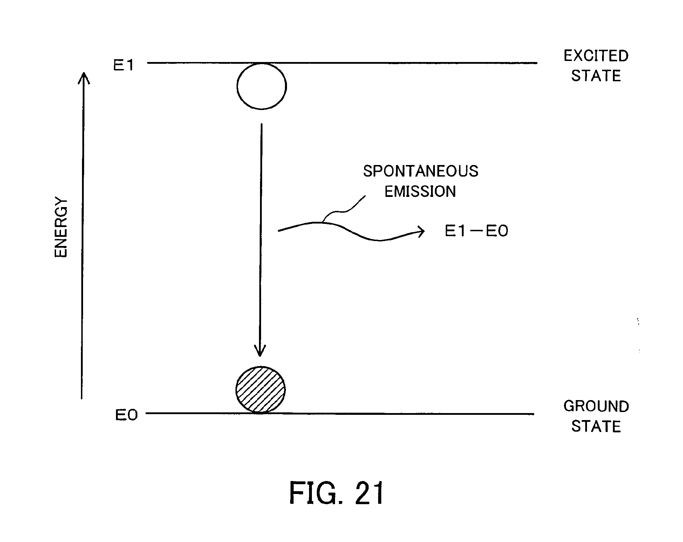

Fig. 21 shows spontaneous emission. It is assumed that the energy of an electron in the ground state is $E0$ and that the energy of the electron in the excited state is $E1$. When the electron is in the excited state, the electron goes into the state in which its energy is low after the elapse of relaxation time.
At this time the electron emits light the energy of which equals the difference between an energy level corresponding to the excited state and an energy level to which the electron has made the transition. In this example, the electron makes the transition from $E1$ to $E0$, so the electron emits light the energy of which equals $(E1-E0)$. The electron in the excited state spontaneously emits light in this way with a probability regardless of the light inputted. As a result, the electron makes the transition to the low energy level. This process is spontaneous emission.

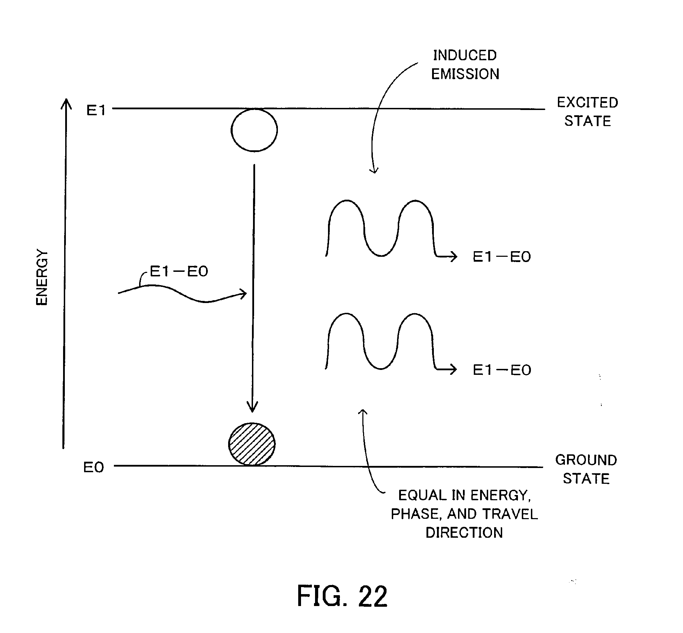

Fig. 22 shows induced emission. It is assumed that when the electron is in the excited state, light with the energy $(E1-E0)$ is inputted from the outside. At this time the electron emits light the energy, phase, and travel direction of which are the same as those of the light inputted and returns to the ground state. That is to say, the number of photons is one at the time of the light being inputted, but the number of photons increases to two at the time of the light being outputted. This phenomenon is induced emission and is a principle underlying optical amplification.
It is assumed that the density of electrons in a substance is N $(/m^3)$, $N1$ of N electrons are in the ground state, and that $N2$ of the N electrons are in the excited state $(N=N1+N2)$. When light is inputted to this substance, optical amplification occurs if induced emission exceeds absorption. Accordingly, the relation $N2>N1$ must hold (it is assumed that spontaneous emission is negligible).

A state in which the density of electrons at a higher energy level is higher than that of electrons at a lower energy level is referred to as population inversion. (Electrons at the lower energy level are stable, so usually the number of electrons at the lower energy level is greater than that of electrons at the higher energy level. By excitation, however, the number of electrons at the higher energy level increases and a population inversion state arises.) A population inversion coefficient t is given by

$$t=N2/N1+N2 (=N2/N)$$

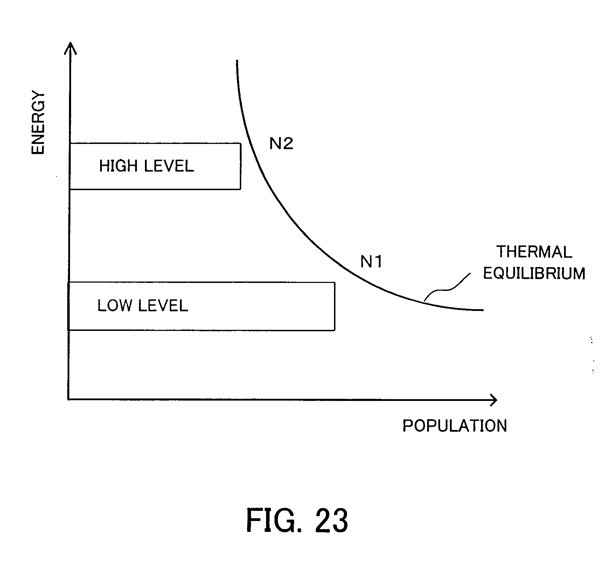

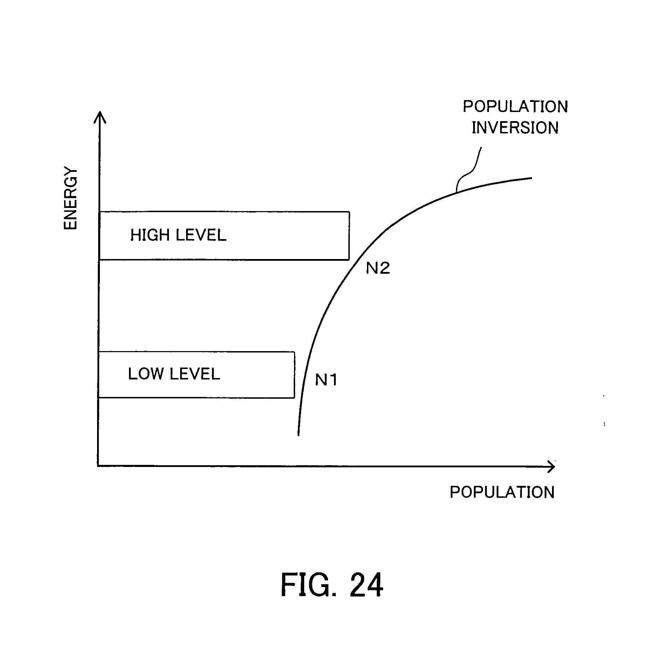

Figs. 23 and 24 show the distribution of electron density in a two-level system. Fig. 23 shows the distribution of electron density in a thermal equilibrium state. Fig. 24 shows a population inversion state. In each of Figs. 23 and 24, a vertical axis indicates energy and a horizontal axis indicates population. Figs. 23 and 24 show that when the substance is in a thermal equilibrium state, many electrons are in the stable ground state and that when the substance is in a population inversion state, many electrons are at high energy levels.

Therefore, a population inversion like that shown in Fig. 24 must be actualized for optical amplification. However, absorption and induced emission occur at the same time (it is known that with one electron absorption and induced emission occur with the same probability). As a result, even if electrons go into an excited state by absorption, the number of electrons which return from the excited state to the ground state by induced emission also increases.

Accordingly, with optical amplifiers of an induced emission type, usually excitation is performed with light by adopting a multi-level system (three-level system for an EDFA, for example).

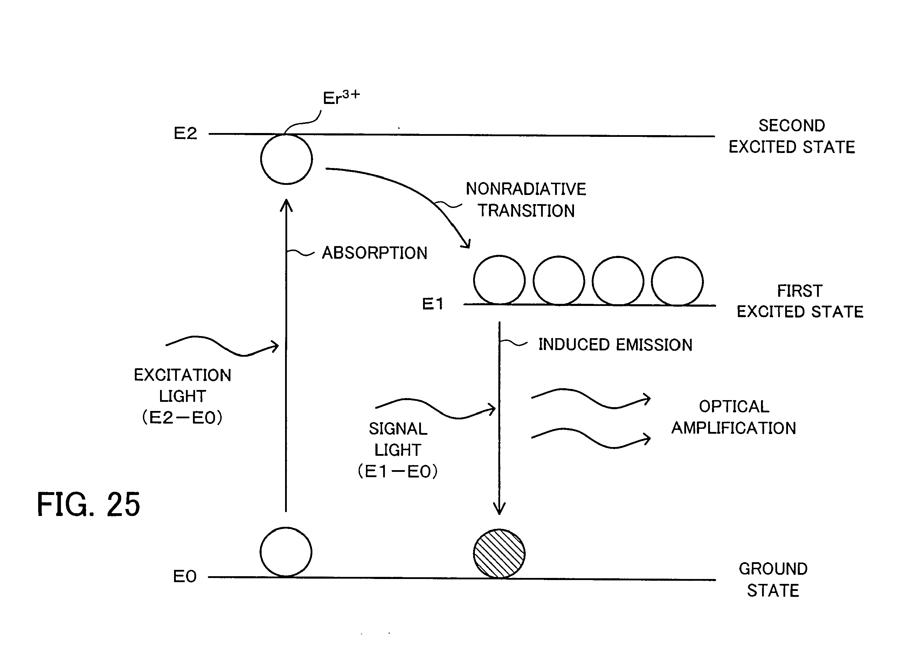

Fig. 25 shows a population inversion in a three-level system. It is assumed that there are two levels corresponding to an excited state. That is to say, it is assumed that there are three levels corresponding to a ground state, a first excited state, and a second excited state, respectively. In addition, energy levels corresponding to the ground state, the first excited state, and the second excited state are E0, E1, and E2, respectively (E0<E1<E2). Descriptions will now be given with the case where amplification is performed with an EDFA as an example.

Amplification operation is performed on condition that the life (mean time during which an electron remains at a level) of the second excited state should be short and that when an erbium ion ($Er^{3+}$) is in the second excited state, it should make the rapid non-radiative transition to the first excited state (an ion which makes the non-radiative transition from a high energy level to a low energy level releases energy not as light but as heat).

When excitation light having energy corresponding to (E2-E0) (usually having a wavelength of 1.48 or 0.98 $\mu$m) is inputted to an EDF which is an optical fiber doped with $Er^{3+}$ ions, $Er^{3+}$ ions in the ground state go into the second excited state by absorption. Then the $Er^{3+}$ ions excited to the second excited state make the rapid non-radiative transition to the first excited state. As a result, many $Er^{3+}$ ions are in the first excited state. Even if the intensity of the excitation light is increased, few $Er^{3+}$ ions make the transition from the second excited state to the ground state by induced emission.

Therefore, a population inversion in which many $Er^{3+}$ ions are in the first excited state can be actualized by sufficiently increasing the intensity of the excitation light. If such a population inversion is obtained in the EDF, then optical signals having energy corresponding to (E1-E0) should be inputted to the EDF. By doing so, $Er^{3+}$ ions make the transition from the first excited state to the ground state by induced emission and the optical signals are amplified.

The characteristics of EDFAs are, for example, that their amplification wavelength band is 1,550 nm which is the minimum loss wavelength band for silica optical fibers used most widely as communication optical fibers, that outputs of several tens to several hundreds of milliwatts can easily be obtained, and that they have a wide gain bandwidth of several terahertz. Accordingly, EDFAs are the most important components for building optical fiber communication systems and are indispensable optical devices.

A technique for reducing four-wave mixing distortion by using an optical fiber having a normal dispersion value has conventionally been proposed as to EDFs (see, for example, Japanese Unexamined Patent Publication No. 2004-79876).

Usually the conventional (C) band from 1,530 to 1,565 nm is used as an amplification band for EDFAs. With a sharp increase in communication traffic, in recent years the number of wavelengths to be used has increased and dense WDM (DWDM) for densely multiplexing wavelengths has been developed. Accordingly, the amplification wavelength band for EDFAs has extended into the long wavelength band (L band) from 1,570 to 1,605 nm.

An EDFA has a gain-wavelength characteristic. That is to say, when many optical signals with different wavelengths are amplified in block, peak gains for these optical signals are not the same and the peak gains differ among the optical signals with different wavelengths.

If peak power values differ among the optical signals with different wavelengths at a receiving end, then transmission quality differs among the optical signals with different wavelengths and an S/N ratio is degraded. Therefore, the gain-wavelength characteristic must be flat in a signal band.

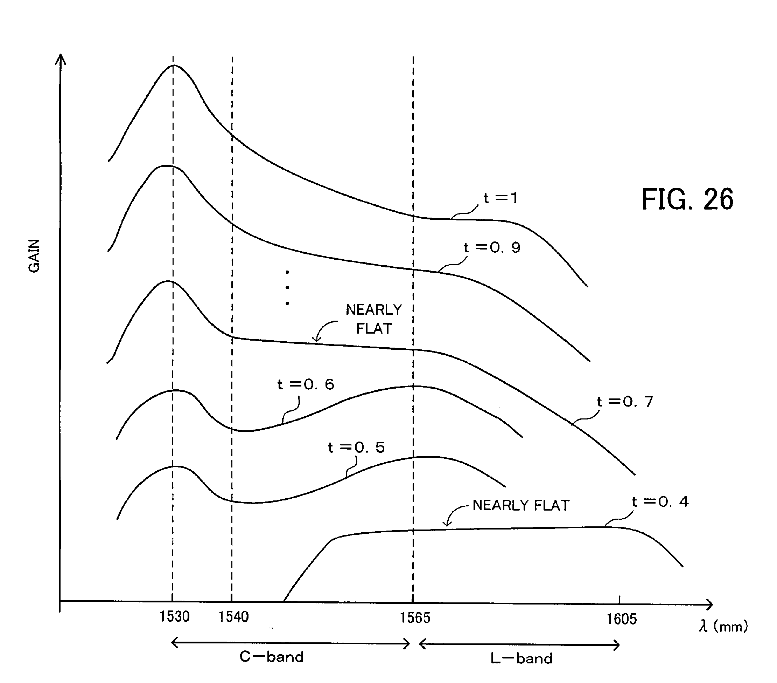

Fig. 26 shows the gain of an EDFA with a population inversion coefficient t as a parameter. In Fig. 26, a vertical axis indicates a gain and a horizontal axis indicates wavelength (nm). As can be seen from Fig. 26, the greater the population inversion coefficient t becomes (the larger the number of $Er^{3+}$ ions at a high energy level becomes), the higher the gain of an EDFA becomes.

In the C band from 1,540 to 1,565 nm, the greater the population inversion coefficient t becomes, the steeper the negative slope of the gain-wavelength curve becomes. On the other hand, if the population inversion coefficient t is small, the slope of the gain-wavelength curve is positive. As can be seen from Fig. 26, the gain-wavelength curve is flattest when t=0.7.

Therefore, control should be exercised so that a population inversion state of about 70% will be actualized. By doing so, a flat gain-wavelength characteristic can be obtained. In this case, a gain is sufficiently high, so optical signals with different wavelengths included in the C band from 1,540 to 1,565 nm can be amplified. The peak power values of these optical signals do not differ so substantially.

There are sharp gain peaks at a wavelength of 1,530 nm. Accordingly, to use a wavelength band including 1,530 nm, a flat gain-wavelength characteristic cannot be obtained only by controlling population inversion.

To obtain a flat gain-wavelength characteristic in this band, a gain equalizing filter having a gain-wavelength characteristic opposite to the gain-wavelength characteristic in a band near 1,530 nm (having a loss-wavelength characteristic that is the same as the gain-wavelength characteristic in a band near 1,530 nm) should be located at, for example, the output stage of the EDFA. By doing so, the gain-wavelength characteristic in the band near 1,530 nm can be made flat.

In the L band from 1,570 to 1,605 nm, on the other hand, a flat gain-wavelength characteristic can be obtained when the population inversion coefficient t=0.4. Therefore, control should be exercised so that a population inversion state of about 40% will be actualized. By doing so, a flat gain-wavelength characteristic can be obtained. As can be seen from Fig. 26, however, the gain of the EDFA becomes low. (The population inversion coefficient is small, so the intensity of light emitted by $Er^{3+}$ ions at induced emission time is low. Therefore, a sufficient gain cannot be obtained.)

Accordingly, the number of $Er^{3+}$ ions in an amplification medium to be excited is increased at L band amplification time by using a long EDF (by, for example, using an EDF which is a maximum of 80 meters longer than an EDF for C band amplification). By doing so, the intensity of light emitted by $Er^{3+}$ ions is increased and a gain is increased. A long EDF is used for L band amplification in this way. As a result, even if t=0.4 (even if the population inversion coefficient is small), a flat gain-wavelength characteristic is actualized and a sufficient gain is secured.

Each of the C band and the L band includes an amplification band of about 35 nm. Therefore, if signal wavelengths are set at intervals of 0.8 nm (about 100 GHz), then optical signals with different forty or more wavelengths in each band can be multiplexed into a single EDFA. In addition, high output is obtained by an EDFA and an optical power output of not less than 200 milliwatts can easily be obtained.

As described above, wide-band high-output EDFAs are optical amplifiers which are very effective in WDM transmission. With an increase in the number of channels and the intensity of output light per channel, however, in recent years marked nonlinear effects (nonlinear optical effects) have showed up.

The property (refractive index) of glass through which light with comparatively high power is propagated changes according to the intensity of the light. This phenomenon is referred to as nonlinearity in optical transmission. If this phenomenon occurs, the linearity of an optical response is lost.

Four-wave mixing (FWM) is an important nonlinear phenomenon which occurs in an optical fiber. When light with two or more different wavelengths is inputted, light with another wavelength is generated. This phenomenon is referred to as FWM.

When four-wave mixing occurs, new interference light is generated. If the wavelength of the interference light matches one of wavelengths contained in multiplexed signal light, then crosstalk occurs and communication quality deteriorates.

Four-wave mixing which occurs on an optical fiber transmission line causes noise or waveform distortion, resulting in deterioration in signal quality. In particular, if L band amplification is performed by an EDFA, a long EDF is used. Therefore, four-wave mixing tends to have a bad influence, compared to the case where C band amplification is performed.

Accordingly, to expand an amplification wavelength band especially into the L band and perform high-quality DWDM transmission in which wavelengths are densely multiplexed, it is essential to reduce four-wave mixing. It is greatly hoped now that an optical amplifier in which four-wave mixing is reduced will be actualized.

With the above conventional technique (Japanese Unexamined Patent Publication No. 2004-79876), four-wave mixing distortion is reduced by using an optical fiber having a normal dispersion value. However, normal dispersion values include negative chromatic dispersion values. Four-wave mixing tends to frequently occur especially in an EDF used in a transmission technology, such as WDM, in which a plurality of wavelengths are multiplexed. It is recognized that even if an EDF having negative chromatic dispersion is used in WDM transmission, four-wave mixing cannot be suppressed effectively.

SUMMARY OF THE INVENTION

The present invention was made under the background circumstances described above. An object of the present invention is to provide a high-quality optical amplifier with high reliability for performing wide-band high-output optical amplification by effectively reducing four-wave mixing.

Another object of the present invention is to provide a high-quality optical fiber with high reliability used as an optical amplification medium for performing wide-band high-output optical amplification by effectively reducing four-wave mixing.

In order to achieve the above objects, an optical amplifier for amplifying an optical signal is provided. This optical amplifier comprises an optical fiber having positive chromatic dispersion in a signal band and used as an optical amplification medium for amplifying a wavelength division multiplex signal containing a plurality of wavelengths; and an excitation section for inputting excitation light to the optical fiber.

The above and other objects, features and advantages of the present invention will become apparent from the following description when taken in conjunction with the accompanying drawings which illustrate preferred embodiments of the present invention by way of example.

BRIEF DESCRIPTION OF THE DRAWINGS

Fig. 1 is a view for describing the principles underlying an optical amplifier according to the present invention.

Fig. 2 shows an MFD.

Fig. 3 shows the structure of an optical fiber.

Fig. 4 shows the relationship between a core diameter and relative refractive index difference with an MFD as a parameter.

Fig. 5 shows the relationship between a core diameter and relative refractive index difference with a chromatic dispersion value at 1,590 nm as a parameter.

Fig. 6 shows the relationship between a core diameter and relative refractive index difference with an MFD and a chromatic dispersion value as parameters.

Fig. 7 is a schematic view showing the occurrence of FMW in a frequency band.

Fig. 8 is a schematic view showing the occurrence of FWM.

Fig. 9 shows the relationship between chromatic dispersion and $\Delta v$.

Fig. 10 shows the contents of a table.

Fig. 11 shows the structure of an EDFA.

Fig. 12 shows the amount of crosstalk caused by FWM.

Fig. 13 shows the relationship between crosstalk caused by FWM and chromatic dispersion with effective cross-sectional area as a parameter.

Fig. 14 shows the relationship between relative refractive index difference and a core diameter with cutoff wavelength as a parameter.

Fig. 15 shows the relationship between relative refractive index difference and a core diameter with bend loss as a parameter.

Fig. 16 shows the relationship between the core diameter and relative refractive index difference of an EDF for reducing FWM crosstalk.

Fig. 17 shows the structure of an EDFA.

Fig. 18 shows the structure of an EDFA.

Fig. 19 shows energy levels.

Fig. 20 shows absorption.

Fig. 21 shows spontaneous emission.

Fig. 22 shows induced emission.

Fig. 23 shows the distribution of electron density in a two-level system.

Fig. 24 shows the distribution of electron density in the two-level system.

Fig. 25 shows a population inversion in a three-level system.

Fig. 26 shows the gain of an EDFA with a population inversion coefficient as a parameter.

DESCRIPTION OF THE PREFERRED EMBODIMENTS

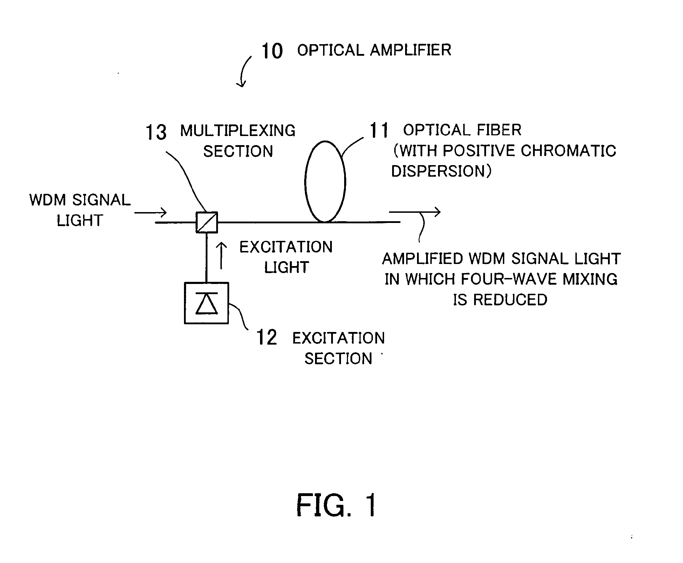

An embodiment of the present invention will now be described with reference to the drawings. Fig. 1 is a view for describing the principles underlying an optical amplifier according to the present invention. An optical amplifier 10 comprises an optical fiber 11, an excitation section 12, and a multiplexing section 13 and amplifies an optical signal.

The optical fiber 11 is an optical amplification medium which has positive chromatic dispersion in a signal band where signal light to be propagated is included and which amplifies a wavelength division multiplex (WDM) signal containing a plurality of wavelengths. The excitation section 12 inputs excitation light to the optical fiber 11.

The multiplexing section 13 combines the WDM signal light and the excitation light. A multiplexed signal is inputted to the optical fiber 11. The WDM signal light is amplified in the optical fiber 11 by the excitation light and is outputted from the optical fiber 11. The optical fiber 11 has positive chromatic dispersion, so the optical amplifier 10 performs optical amplification by which four-wave mixing (FWM) is suppressed.

A method for designing the optical amplification medium (optical fiber (EDF) 11) used in the optical amplifier 10 will now be described in detail step by step. The characteristics of conventional EDFs, a process of the occurrence of FWM, the characteristics and effects of an EDF according to the present invention, and the like will also be described. Hereinafter, the case where the optical amplifier 10 is applied to an EDFA will be described.

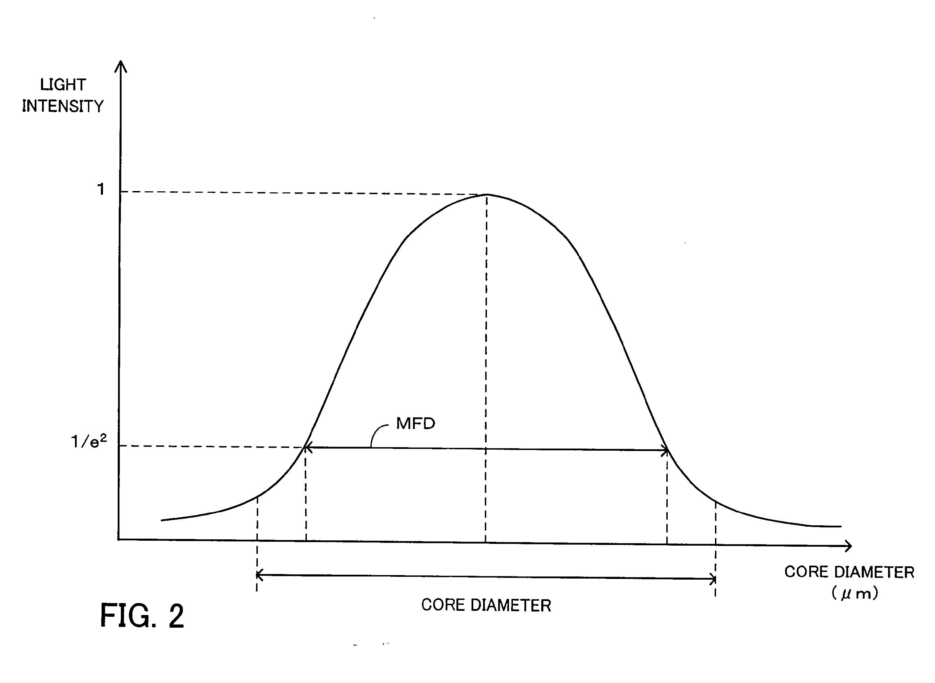

To increase efficiency of amplifying the signal light by using the excitation light, usually the mode field diameter (MFD) of an EDF, being an optical amplification medium, is 4.5 to 5 $\mu$m and is smaller than that of an ordinary transmission line optical fiber. If the MFD is small, the EDF has a negative chromatic dispersion characteristic. The fact that a conventional EDF has a negative chromatic dispersion characteristic will be described first by using Figs. 2 through 6.

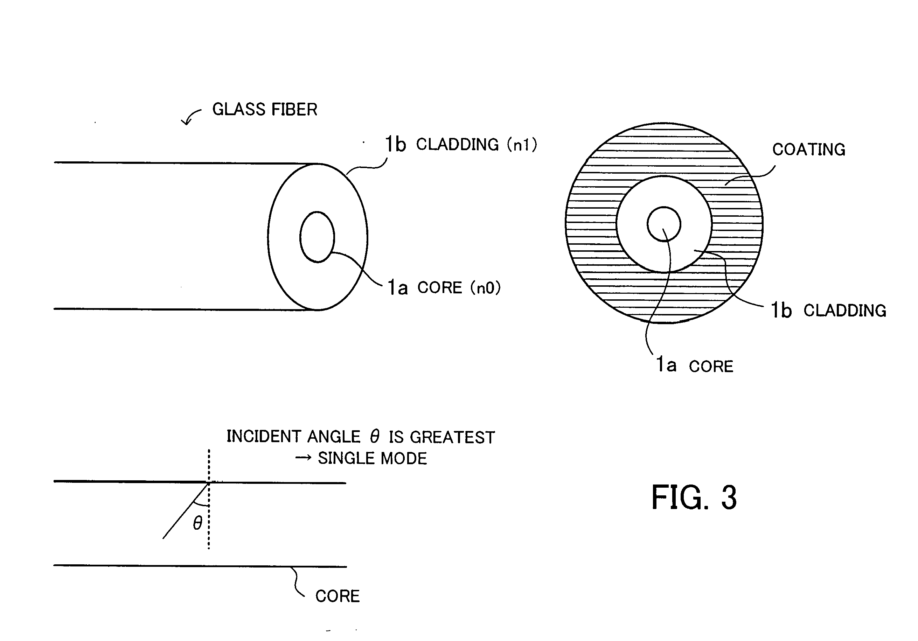

Fig. 2 shows an MFD. In Fig. 2, a vertical axis indicates light intensity and a horizontal axis indicates a core diameter ($\mu$m). Fig. 3 shows the structure of an optical fiber. An optical fiber includes a core 1a and a cladding 1b. By making the refractive index of the core 1a higher than the refractive index of the cladding 1b, the major part of optical power is trapped in the core 1a and light is propagated through the core 1a by total reflection (at a reflectance of 100%).

An MFD is a parameter indicative of the distribution of light in a cross section of a single mode propagated through the core 1a. (A path of the light propagated through the core is referred to as a mode and the path of the light an incident angle θ to an interface between the core and the cladding of which is the greatest is referred to as a single mode. The single mode forms the least angle with the axis of the optical fiber.)

As can be seen from Fig. 2, the relationship between light intensity and a core diameter is expressed as a Gaussian curve. Light intensity is highest at the center of the core. With an increase in the distance from the center of the core, light intensity becomes lower. On this curve, it is assumed that the maximum value of light intensity is 1. Then a core diameter corresponding to a light intensity of $1/e^2$ (e is the base of the natural logarithms (=2.718...)) is generally defined as an MFD.

If an MFD is small, light density in the core is high. If an MFD is great, light density in the core is low. (That is to say, if an MFD is small, the capability to trap light to be propagated in the core (light concentration capability) is improved.)

A core diameter and relative refractive index difference are parameters which determine an MFD. To make an MFD small, a core diameter is made small and relative refractive index difference is made a great value. Relative refractive index difference is the difference between the maximum refractive index at the center of the core and the refractive index of the cladding and is defined as

$$\Delta = (n0 - n1)/n1$$

where $\Delta$ is relative refractive index difference, n0 is the refractive index of the core, and n1 is the refractive index of the cladding. (If relative refractive index difference is a great value, then the refractive index of the core is higher than that of the cladding. As a result, light concentration capability is improved.)

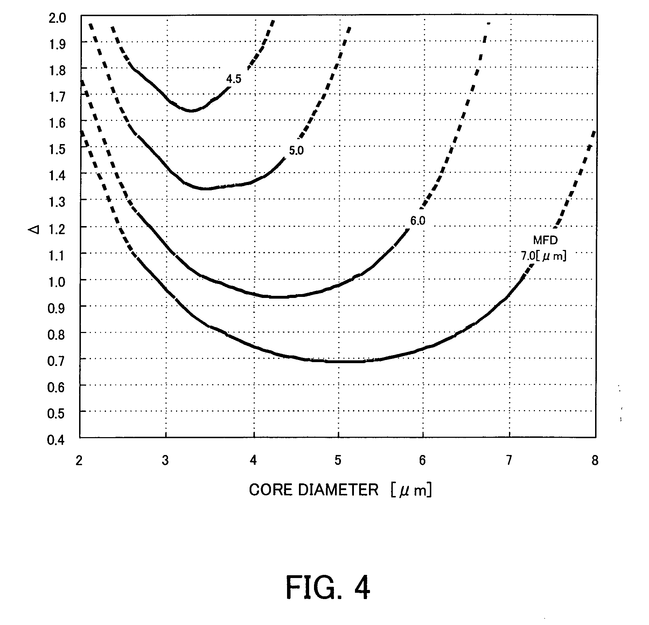

Fig. 4 shows the relationship between a core diameter and relative refractive index difference with an MFD as a parameter. In Fig. 4, a vertical axis indicates relative refractive index difference $\Delta$ and a horizontal axis indicates a core diameter ($\mu$m). Fig. 4 shows the relationship between a core diameter and relative refractive index difference $\Delta$ in a step index optical fiber in which an MFD is 4.5 to 7 $\mu$m. (An optical fiber in which the distribution of refractive indices in a core is uniform and light is propagated changing stepwise in the core is referred to as a step index optical fiber. An optical fiber in which the distribution of refractive indices in a core changes gradually and light in sine waveform is propagated in serpentine curve in the core is referred to as a graded index optical fiber.)

As can be seen from Fig. 4, an MFD becomes small by making a core diameter small and making $\Delta$ a great value. With EDFs, an MFD is made small in this way and excitation light density is increased. By doing so, a good population inversion is formed throughout a core.

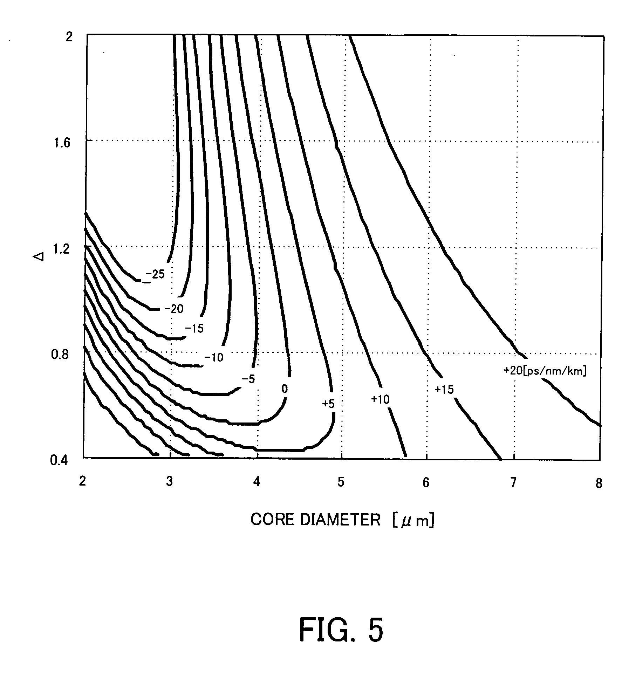

Fig. 5 shows the relationship between a core diameter and relative refractive index difference with a chromatic dispersion value at 1,590 nm as a parameter. In Fig. 5, a vertical axis indicates relative refractive index difference $\Delta$ and a horizontal axis indicates a core diameter ($\mu$m). Optical signals with different wavelengths are propagated through an optical fiber at different speeds. This causes chromatic dispersion.

Chromatic dispersion is defined as difference in propagation delay time which arises when two monochromatic optical signals with wavelengths which differ from each other by 1 nm are propagated by 1 km. Chromatic dispersion is expressed in ps/nm/km.

As stated above, to make the MFD of an EDF small, a core diameter is made small and Δ is increased. In this case, as can be seen from Fig. 5, a negative chromatic dispersion characteristic is obtained.

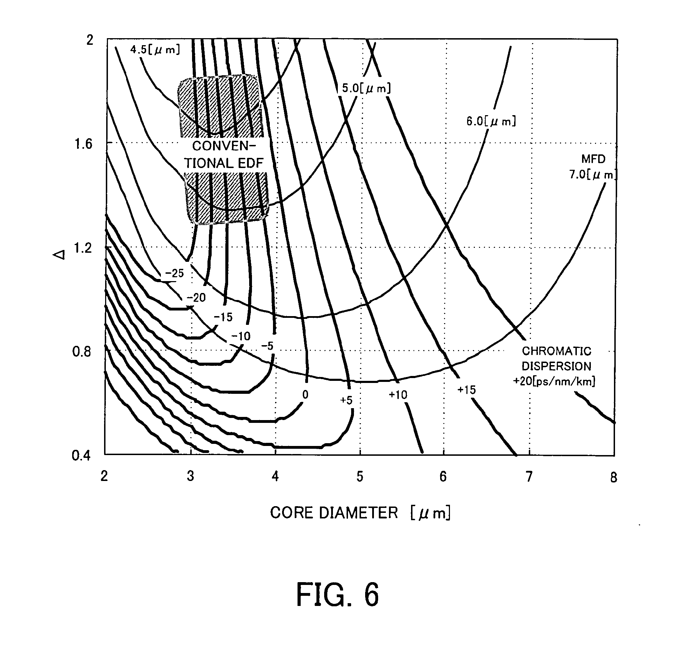

Fig. 6 shows the relationship between a core diameter and relative refractive index difference with an MFD and a chromatic dispersion value as parameters. In Fig. 6, a vertical axis indicates relative refractive index difference Δ and a horizontal axis indicates a core diameter (μm). Fig. 6 is obtained by combining Figs. 4 and 5. In an area corresponding to MFDs of about 4.5 to 5 μm, chromatic dispersion values are -25 to -5 ps/nm/km. This means that conventional EDFs have negative chromatic dispersion characteristics.

Factors in the occurrence of FWM will now be described. When three light waves ω1, ω2, and ω3 are inputted to an optical fiber, a new light wave ω4 is generated through tertiary nonlinear polarization. FWM is defined as such a phenomenon. (When a substance is irradiated with light, an electron in an atom or a molecule is displaced by the electric field of the light and polarization occurs. When the substance is irradiated with a strong laser beam, this polarization produces a nonlinear response. As a result, secondary or tertiary nonlinear polarization proportional to the square or cube of the electric field of the light occurs. Such polarization is referred to as nonlinear polarization.) The factors in the occurrence of FWM will now be described more concretely.

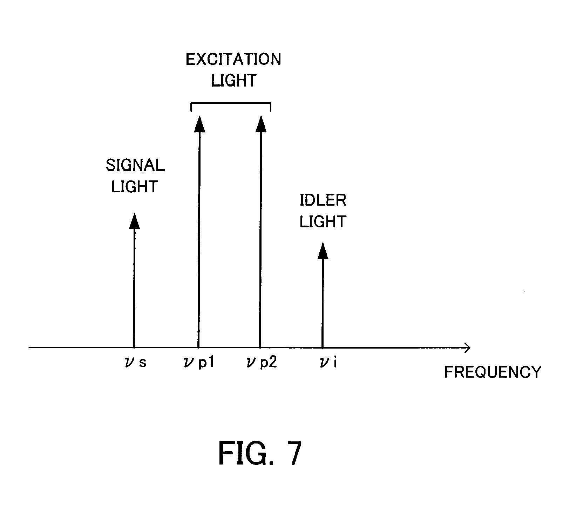

Fig. 7 is a schematic view showing the occurrence of FMW in a frequency band. It is assumed that the frequency of signal light which already exists when excitation light is inputted is νs and that the frequencies of the excitation light inputted are νp1 and νp2 (the excitation light may be another signal light). A new light wave is generated by these three light waves. This phenomenon is referred to as FWM. The interference light newly generated is referred to as idler light and the frequency νi of the idler light is given by

$$\nu i = \nu p1 + \nu p2 - \nu s \qquad (1)$$

The case where the frequencies of the two excitation light waves are equal (νp1=νp2) is referred to as degenerated four-wave mixing (DFWM). In the case of degenerated four-wave mixing, equation (1) can be written as

$$\nu i = 2\nu p1 - \nu s$$

In addition, it is known that marked FWM occurs when input wavelengths match the zero-dispersion wavelength (specific wavelength at which the spread of a waveform (chromatic dispersion) is minimized) of the optical fiber.

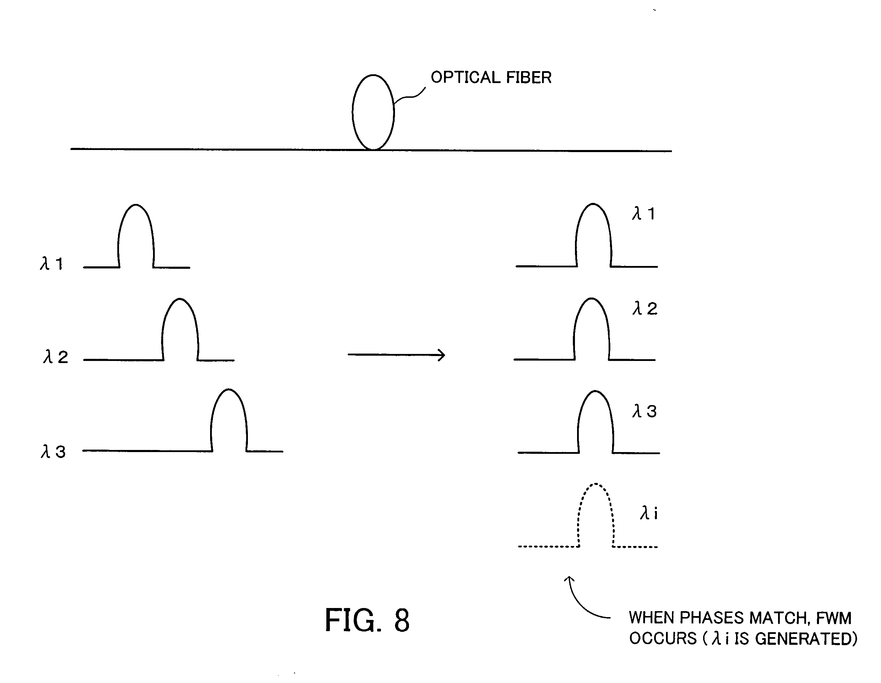

Fig. 8 is a schematic view showing the occurrence of FWM. It is assumed that light waves with wavelengths λ1 through λ3 travel along the length of the optical fiber. When the difference in phase among these light waves becomes approximately zero in a transmission process (when the phases of the three light waves are almost the same), FWM occurs and an idler light wave with a wavelength λi is generated. When the phases of the three light waves with wavelengths λ1 through λ3 considerably differ from one another, FWM does not occur.

That is to say, when the input wavelengths λ1 through λ3 match the zero-dispersion wavelength, the phases of the three light waves match. (Chromatic dispersion indicates the differences in propagation speed among the light waves with wavelengths λ1 through λ3 and zero dispersion indicates that there is no difference in propagation speed among the light waves with wavelengths λ1 through λ3.) In this case, FWM occurs. Great chromatic dispersion (absolute value of chromatic dispersion) leads to great differences in propagation speed among the light waves with wavelengths λ1 through λ3. As a result, the phases of the light waves with wavelengths λ1 through λ3 differ from one another. This lowers the probability of the occurrence of FWM. The occurrence of FWM based on the phase matching state of the light waves propagated is referred to as a phase matching condition.

FWM is a phenomenon caused by a nonlinear optical effect, so FWM tends to occur when light intensity in the optical fiber is high. With an EDF, the effective cross-sectional area of light is reduced by making an MFD small in order to increase efficiency in amplification. As a result, a nonlinear phenomenon tends to occur. (Effective cross-sectional area Aeff is given by

$$Aeff \approx \pi \times (MFD/2)^2$$

If effective cross-sectional area is small (MFD is small), then light density (light intensity) in the core is high and a nonlinear phenomenon tends to occur.)

As has been described, the occurrence of FWM largely depends on whether equation (1) holds, the phase matching condition regarding chromatic dispersion, and effective cross-sectional area regarding an MFD. (That is to say, if equation (1) is satisfied, phases match, and light intensity is high, then the probability of the occurrence of FWM is highest.)

With an EDFA for L band amplification, in particular, a long EDF is used compared with an EDFA for C band amplification. As a result, there is a strong possibility that the phases of light waves match and that equation (1) holds. Therefore, FWM tends to occur compared with the case of C band amplification.

If the wavelength of the idler light matches one of wavelengths multiplexed in the signal light, then crosstalk occurs and communication quality deteriorates.

The relationship between a phase matching amount and the difference $\Delta v$ between a signal frequency and a zero-dispersion frequency will now be described. As can be seen from the above factors in the occurrence of FWM, to suppress FWM, there should be a great difference between a signal frequency $v_s$ and a zero-dispersion frequency $v_0$ and a phase matching amount should be a great value and not zero. (There should be phase mismatching. That is to say, a great absolute value of chromatic dispersion should be obtained in a signal band.)

An idler light gain g is given by

$$g=[(\gamma P)^2-(\kappa/2)^2]^{1/2} \qquad (2)$$

where $\gamma$ is a nonlinear coefficient, P is optical power, and $\kappa$ is a phase matching amount (propagation constant difference). The nonlinear coefficient $\gamma$ is given by

$$\gamma=2\pi v \times n2/(c \times Aeff) \qquad (3)$$

where c is the speed of light, n2 is a nonlinear refractive index, and Aeff is the effective cross-sectional area of light. In equation (3), if the effective cross-sectional area Aeff of light is increased, then the nonlinear coefficient $\gamma$ becomes small. Therefore, in equation (2), the gain g by FWM becomes small. For simplification of equations (2)and (3), each parameter is indicated by an average obtained by ignoring the difference of frequency of light.

On the other hand, the phase matching amount $\kappa$ can be expressed as propagation constant difference $\Delta\beta$. To simplify an equation, a change in phase caused by self phase modulation (SPM) and cross phase modulation (XPM) is ignored and it is assumed that degenerated four-wave mixing ($v_{p1}=v_{p2}$) occurs. (SPM and XPM are nonlinear phenomena produced by nonlinear optical effects. SPM is a phase shift phenomenon which occurs in one-wave transmission. XPM is a phase shift phenomenon which occurs when light waves with different wavelengths are transmitted at the same time in the same direction.) The propagation constant difference $\Delta\beta$ is then given by

$$\kappa = \Delta\beta = \beta(v_s)+\beta(v_i)-2\beta(v_{p1})$$

$$= \frac{2\pi c^2}{v_0^4}\frac{dDc}{d\lambda}(v_s-v_{p1})^2(v_s-v_0) \qquad \cdots (4)$$

where $v_0$ is a frequency at which the chromatic dispersion of the optical fiber becomes zero, Dc is the chromatic dispersion of the optical fiber, and therefore dDc/d$\lambda$ is a dispersion slope (degree of a change in chromatic dispersion in respect to a change in wavelength).

In equation (2), the gain g by FWM is maximized when the phase matching amount $\kappa=0$ (propagation constant difference $\Delta\beta=0$). As the absolute value of $\kappa$ grows, the gain g by FWM becomes lower. In equation (4), as the difference $\Delta v$ (=$v_s$-$v_0$) between the signal frequency $v_s$ and the zero-dispersion frequency $v_0$ grows, $\kappa$ (=$\Delta\beta$) grows. Therefore, by making the difference $\Delta v$ a great value, the gain g by FWM decreases, the idler light is suppressed, and FWM can be suppressed.

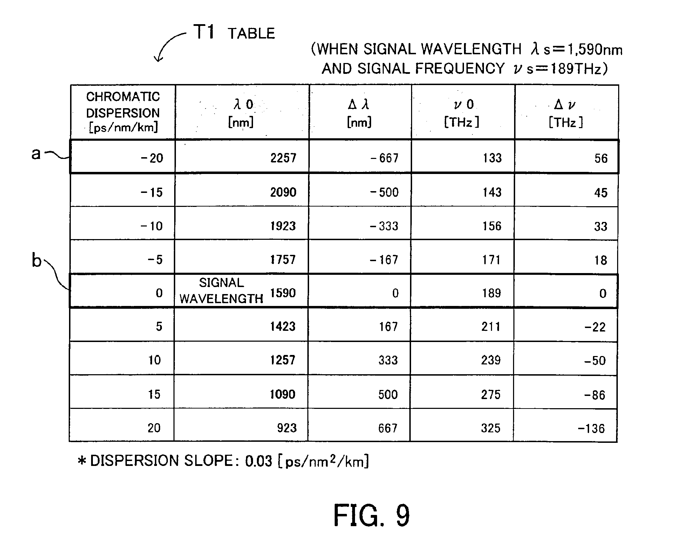

The relationship between chromatic dispersion and $\Delta v$ will now be described. Fig. 9 shows the relationship between chromatic dispersion and $\Delta v$. A table T1 includes five columns: chromatic dispersion (ps/nm/km) at 1,590 nm, a zero-dispersion wavelength λ0 (nm), the difference Δλ (nm) between the zero-dispersion wavelength and a signal wavelength, the zero-dispersion frequency ν0 (THz), and the difference Δν (THz) between the signal frequency νs and the zero-dispersion frequency ν0. Calculations are done with the signal wavelength λs and a dispersion slope as 1,590 nm and 0.03 ps/nm$^2$/km respectively.

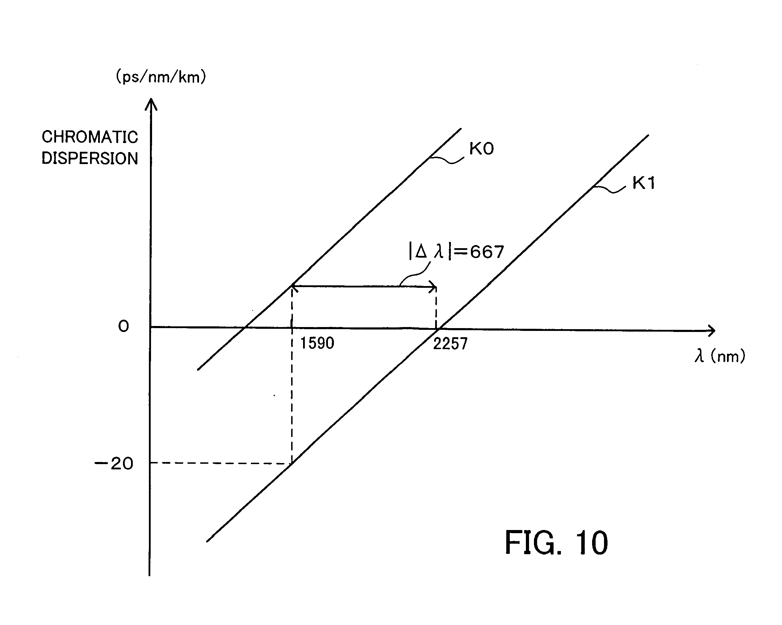

Fig. 10 shows the contents of the table T1. In Fig. 10, a vertical axis indicates chromatic dispersion (ps/nm/km) and a horizontal axis indicates a wavelength (μm). A straight line K1 indicates an optical fiber shown in a row a in the table T1.

On the straight line K1, chromatic dispersion is -20 (ps/nm/km) when the signal wavelength λs is 1,590 nm. In this case, the zero-dispersion wavelength λ0 is 2,257 nm (the slope of the straight line K1 (dispersion slope) is 0.03 (ps/nm$^2$/km).) Δλ=1590-2257=-667 nm.

The zero-dispersion frequency ν0=c/λ0=(3×10$^8$)/(2257×10$^{-9}$)=133 THz (where c is the speed of light) and Δν=νs-ν0=((3×10$^8$)/(1590×10$^{-9}$))-133 (THz)=189 (THz) -133 (THz)=56 THz. A straight line can be drawn also in another row in the table T1. A straight line K0 indicates the contents of a row b in the table T1.

In the column Δν in the table T1, as Δν approaches zero, FWM tends to occur (phase matching). Therefore, to suppress FWM, chromatic dispersion in a row where the absolute value of Δν is high (phase mismatching) is selected. If attention is riveted on the relationship between chromatic dispersion and Δν, it is known that the values of Δν corresponding to chromatic dispersions the absolute values of which are equal differ significantly.

For example, the values of Δν corresponding to chromatic dispersions of -15 ps/nm/km and +15 ps/nm/km are 45 THz and -86 THz respectively. Their absolute values indicate that the degree of phase mismatching at a chromatic dispersion of +15 ps/nm/km is approximately twice the degree of phase mismatching at a chromatic dispersion of -15 ps/nm/km. Therefore, if the absolute values of two chromatic dispersion values are equal, an EDF having a positive chromatic dispersion value can suppress FWM more strongly.

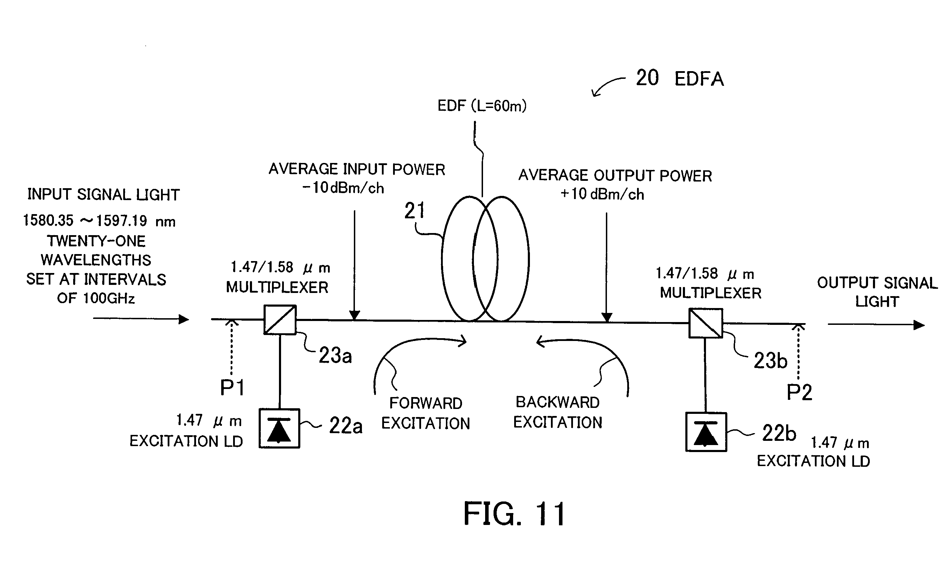

Calculations for crosstalk caused by FWM in an EDFA model will now be described. Fig. 11 shows the structure of an EDFA. An EDFA 20 shown in Fig. 11 is used for measuring the amount of crosstalk caused by FWM (FWM crosstalk).

The EDFA 20 includes an EDF 21, excitation laser diodes (LDs) 22a and 22b, and multiplexers 23a and 23b. It is assumed that the length of the EDF 21 is 60 m and that WDM signal light containing twenty-one different wavelengths which are included in the L band from 1,580.35 to 1,597.19 nm and which are at intervals of 100 GHz (about 0.8 nm) is inputted. The excitation LDs 22a and 22b both emit excitation light with a wavelength of 1.47 μm. The excitation LD 22a performs forward excitation on the EDF 21 via the multiplexer 23a and the excitation LD 22b performs backward excitation on the EDF 21 via the multiplexer 23b.

Average power inputted to the EDF 21 is -10 dBm per channel (-10 dBm/ch) at the output stage of the multiplexer 23a. Average power outputted from the EDF 21 after amplification is +10 dBm per channel (+10 dBm/ch) at the input stage of the multiplexer 23b. An average output power of +10 dBm/ch is a common value used on a transmission line.

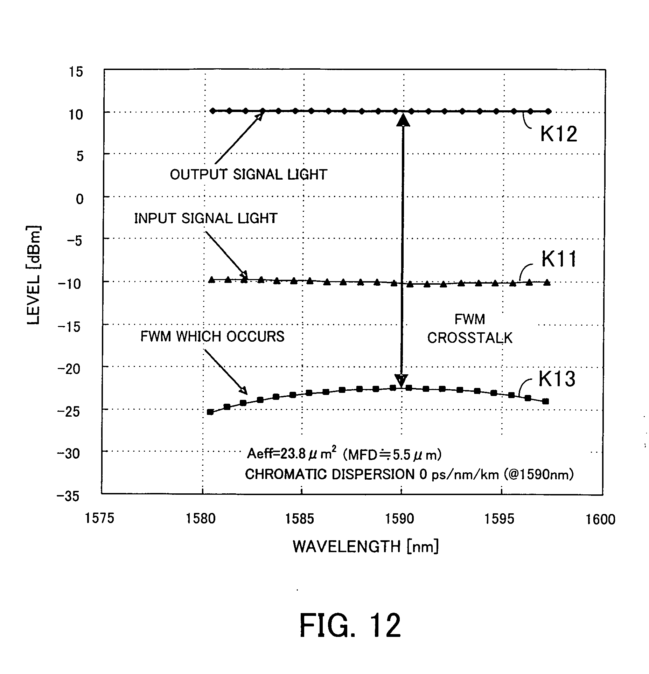

Fig. 12 shows the amount of crosstalk caused by FWM. In Fig. 12, a vertical axis indicates a level (dBm) and a horizontal axis indicates a wavelength (nm). Preemphasis (adding a deviation to an input level according to wavelengths) is performed on input signal light so that the level of output signal light will be equal at each wavelength.

A curve K11 is obtained by plotting the level of input signal light with each of the twenty-one different wavelengths at a point P1 in Fig. 11. A curve K12 is obtained by plotting the level of output signal light with each of the twenty-one different wavelengths at a point P2 in Fig. 11. A curve K13 is obtained by plotting the level of FWM which occurs at each of the twenty-one different wavelengths at the point P2 in Fig. 11 (by plotting the level of idler light generated according to the twenty-one different wavelengths).

Crosstalk (dB) caused by FWM is defined as the difference between FWM (dBm) which occurs and output signal light (dBm) (crosstalk (dB) caused by FWM = (FWM (dBm) which occurs) - (output signal light (dBm)).

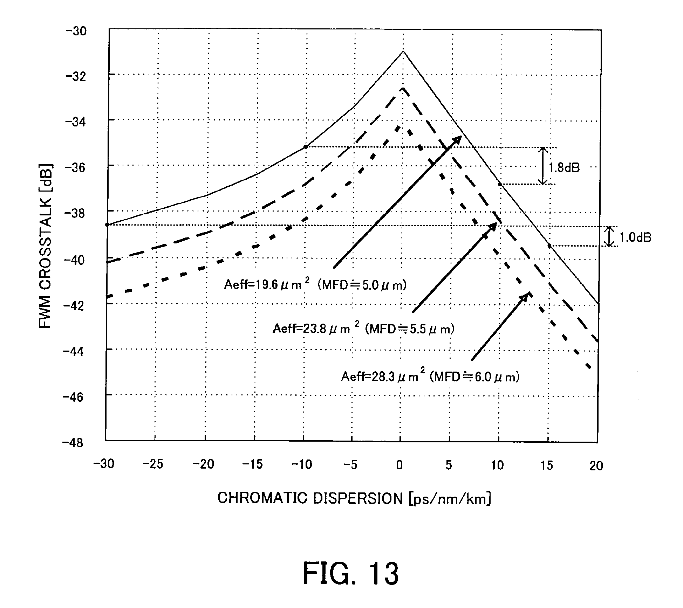

Fig. 13 shows the relationship between crosstalk caused by FWM and chromatic dispersion with effective cross-sectional area as a parameter. In Fig. 13, a vertical axis indicates FWM crosstalk (dB) and a horizontal axis indicates chromatic dispersion (ps/nm/km). Effective cross-sectional area Aeff is given by

$$\text{Aeff} \approx \pi \times (\text{MFD}/2)^2$$

It is assumed that Aeff is 19.6 μm$^2$ (MFD≈5.0 μm), 23.8 μm$^2$ (MFD≈5.5 μm), and 28.3 μm$^2$ (MFD≈6.0 μm). Calculations are done by changing chromatic dispersion from -30 to +20 ps/nm/km (it is assumed that a dispersion slope, a nonlinear refractive index, and the length of the EDF are 0.03 ps/nm$^2$/km, 3.0×10$^{-20}$ m$^2$/W, and 60 m, respectively).

As can be seen from Fig. 13, as effective cross-sectional area (MFD) becomes larger, FWM crosstalk decreases. Moreover, even if the absolute values of chromatic dispersion values are equal, FWM crosstalk at a positive chromatic dispersion value is lower than FWM crosstalk at a negative chromatic dispersion value. For example, FWM crosstalk at +10 ps/nm/km is about 1.8 dB lower than FWM crosstalk at -10 ps/nm/km.

If the absolute value of Δν is high, FWM can be suppressed. In the table T1 shown in Fig. 9, as the absolute value of a chromatic dispersion value becomes higher, the absolute value of Δν grows. As a result, seemingly a negative chromatic dispersion value the absolute value of which is high should be selected for the EDF. That is to say, seemingly there is no need to adhere to an EDF having a positive chromatic dispersion value.

In Fig. 13, -30 ps/nm/km is taken as an example of a negative chromatic dispersion value the absolute value of which is high, and +15 ps/nm/km is taken as an example of a positive chromatic dispersion value. As can be seen from Fig. 13, FWM crosstalk at +15 ps/nm/km is about 1.0 dB lower than FWM crosstalk at -30 ps/nm/km.

In other words, to effectively reduce FWM crosstalk, not a negative chromatic dispersion value (d) the absolute value of which is high but a positive chromatic dispersion value should be selected as a chromatic dispersion value which makes the absolute value of Δν high. In this case, the absolute value of the positive chromatic dispersion value may be in some measure small.

This means that if the absolute values of negative and positive chromatic dispersion values are equal, FWM crosstalk can be reduced more significantly by selecting the positive chromatic dispersion value and that phases do not match in a frequency band especially in an optical fiber having a positive chromatic dispersion value.

To fabricate an optical fiber having a negative chromatic dispersion value of -30 ps/nm/km, a core diameter must be narrowed and the relative refractive index difference A must be widened. As a result, an MFD becomes small and therefore FWM tends to occur.

With an optical fiber having positive chromatic dispersion, on the other hand, the relative refractive index difference A does not need to be made a very great value. Therefore, it is easy to fabricate such an optical fiber. (With an optical fiber having positive chromatic dispersion, a core diameter is large and relative refractive index difference is small. Accordingly, an MFD is in a measure large compared with an optical fiber having negative chromatic dispersion. As a result, compared with an optical fiber having negative chromatic dispersion, usually an optical fiber having positive chromatic dispersion is easy to fabricate.) If this point is also considered, it is known that an EDF having positive chromatic dispersion is more favorable for reducing FWM.

To reduce FWM crosstalk in the EDFA 20 shown in Fig. 11, Aeff and a chromatic dispersion value for the EDF 21 should be set to, for example, 28.3 $\mu m^2$ (MFD≈6.0 $\mu m$) and +15 ps/nm/km respectively. By doing so, FWM crosstalk can be reduced to about -43 dB.

Other parameters for an EDF will now be discussed. It is known from the above descriptions that the characteristic of positive chromatic dispersion is effective in reducing FWM crosstalk. A cutoff wavelength and bend loss are also considered as other parameters which determine the characteristics of an EDF.

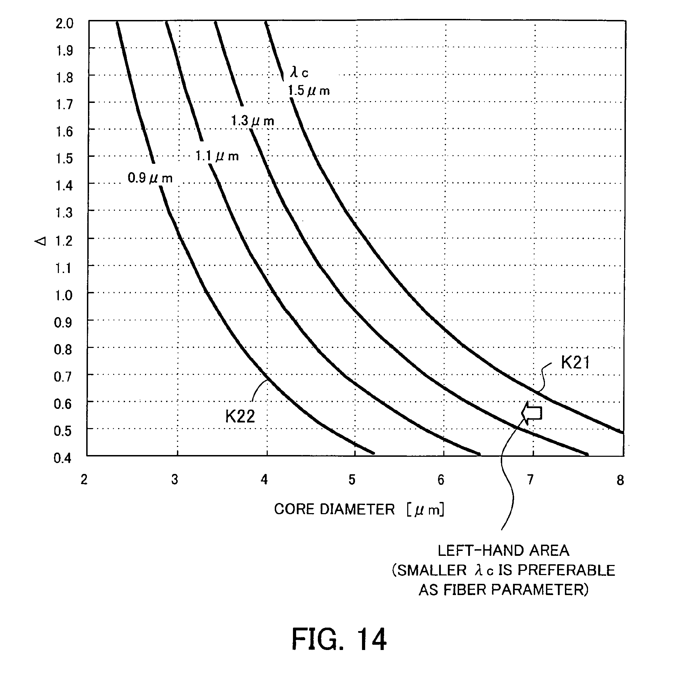

Fig. 14 shows the relationship between relative refractive index difference and a core diameter with a cutoff wavelength as a parameter. In Fig. 14, a vertical axis indicates relative refractive index difference A and a horizontal axis indicates a core diameter ($\mu m$). An optical fiber becomes a single mode optical fiber at a light wavelength longer than a certain wavelength. This certain wavelength is referred to as a cutoff wavelength. One of the characteristics of a single mode optical fiber is that there is no mode dispersion (propagation time differs among different optical paths (modes) along which light is propagated). (Most of optical fibers manufactured at present are single mode optical fibers.)

Fig. 14 shows that light with a wavelength longer than or equal to 1.5 $\mu m$ can be propagated in single mode in an area to the left of a curve K21 corresponding to a cutoff wavelength of 1.5 $\mu m$. In addition, Fig. 14 shows that light (including excitation light with a wavelength of 0.98 $\mu m$) with a wavelength longer than or equal to 0.9 $\mu m$ can be propagated in single mode in an area to the left of a curve K22 corresponding to a cutoff wavelength of 0.9 $\mu m$. Accordingly, If a cutoff wavelength is shorter, signal light with a wavelength included in a wider band can be propagated in single mode.

To propagate signal light with a wavelength of 1.5 $\mu m$ in single mode, a core diameter and relative refractive index difference A included in the area to the left of the curve K22 are selected. For example, a core diameter smaller than or equal to 5.0 $\mu m$ and relative refractive index difference A smaller than or equal to 1.2 should be selected.

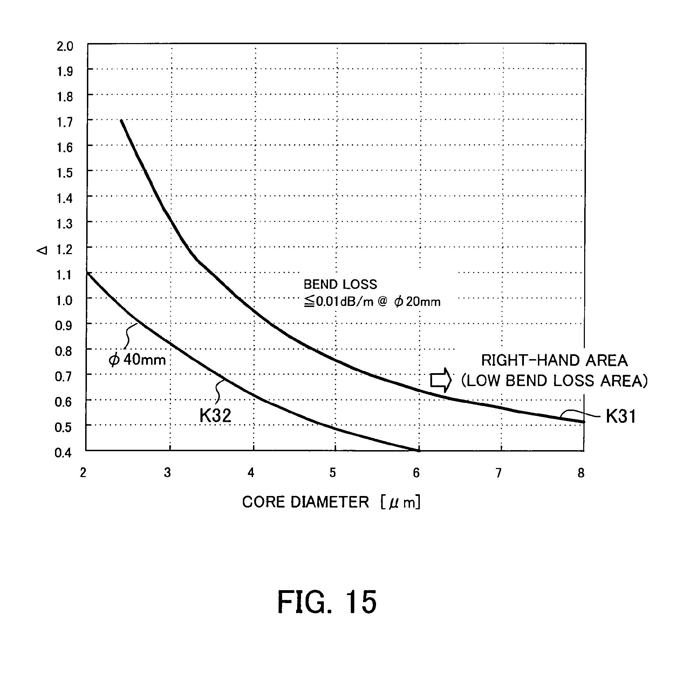

Fig. 15 shows the relationship between relative refractive index difference and a core diameter with bend loss as a parameter. In Fig. 15, a vertical axis indicates relative refractive index difference A and a horizontal axis indicates a core diameter ($\mu m$). Bend loss indicates the amount of optical loss which occurs when a propagation mode in the direction of the axis is converted into a radial mode according to the degree to which an optical fiber is bent. (That is to say, when an optical fiber is wound into circles with a small diameter, it loses the capability to trap light in the core. As a result, the light is emitted into the cladding and the propagation capability is lost.) For example, a bend loss of 0.01 dB/m@ φ 20mm indicates that when an optical fiber is wound into circles with a diameter of 20 mm, the amount of optical loss per meter is 0.01 dB.

Fig. 15 shows that if an optical fiber is wound into circles with a diameter of 20 mm, optical loss is lower than or equal to 0.01 dB in an area to the right of a curve K31 corresponding to a bend loss of 0.01 dB/m@ φ 20mm. In addition, Fig. 15 shows that if the optical fiber is wound into circles with a diameter of 40 mm, optical loss is lower than or equal to 0.01 dB in an area to the right of a curve K32. (With the curve K32, the optical fiber is wound into circles with a diameter of 40 mm. That is to say, the optical fiber is gently wound, compared with the case of the curve K31. Therefore, compared with the case of the curve K31, the permissible limits of relative refractive index difference A and a core diameter within which optical loss is lower than or equal to 0.01 dB are wide.)

Accordingly, if the optical fiber is wound into circles with a diameter of 20 mm, a core diameter larger than or equal to 5.0 $\mu$m and relative refractive index difference A greater than or equal to 0.8, for example, should be selected in order to make optical loss lower than or equal to 0.01 dB.

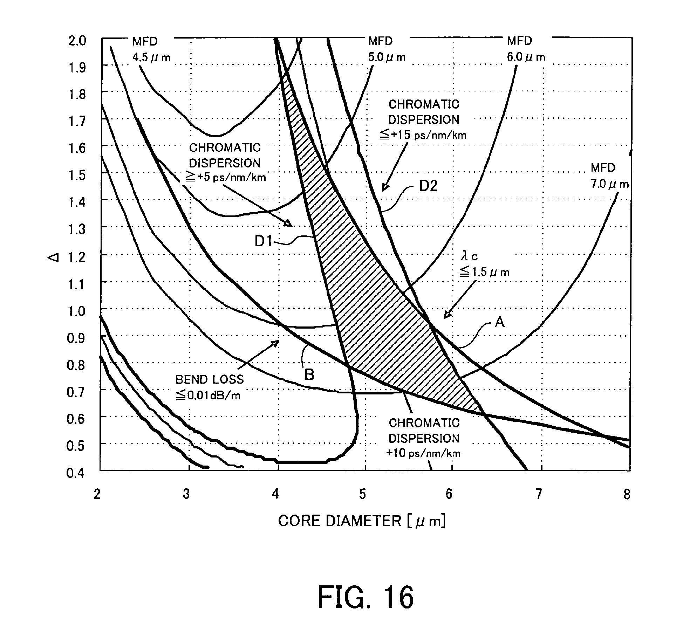

Fig. 16 shows the relationship between the core diameter and relative refractive index difference A of an EDF for reducing FWM crosstalk. In Fig. 16, a vertical axis indicates relative refractive index difference A and a horizontal axis indicates a core diameter ($\mu$m). In Fig. 16, an MFD, chromatic dispersion, a cutoff wavelength, and bend loss are shown as parameters.

It is assumed that a chromatic dispersion value is D ps/nm/km and that to reduce FWM crosstalk, $+5 \leq D \leq +15$ (curves D1 and D2 correspond to +5 and +15 ps/nm/km respectively). In Fig. 16, an area enclosed by the curves D1 and D2, a curve A corresponding to a cutoff wavelength ($\lambda c$) of 1.5 $\mu$m or less, and a curve B corresponding to a bend loss of less than 0.01 dBm is indicated by oblique lines (the reason for adopting $+5 \leq D \leq +15$ as positive chromatic dispersion is that an optical fiber having such chromatic dispersion is usually easy to fabricate).

Therefore, by selecting a core diameter and relative refractive index difference included in the area indicated by oblique lines, an EDF which has a proper positive chromatic dispersion value, in which FWM crosstalk is reduced, which can propagate light with a wavelength of 1.5 $\mu$m in single mode, and in which optical loss is about 0.01 dB even when it is wound into circles with a diameter of 20 mm can be actualized.

As can be seen from the area indicated by oblique lines, the optimum range of the core diameter, relative refractive index difference, and chromatic dispersion of an EDF is 3.9 to 6.3 pm, 0.6 to 2.0, and +5 to +15 ps/nm/km, respectively.

By amplifying a WDM signal by using an EDF designed in this way, FWM crosstalk can be reduced and wideband high-output optical amplification can be performed. As a result, the quality and reliability of WDM transmission can be improved.

With an EDFA for performing optical amplification including L band amplification, a long EDF is used. Accordingly, compared with C band amplification, FWM crosstalk tends to occur. By using an EDF designed by the above method, however, FWM crosstalk can be reduced effectively even in a long EDF.

When the area in Fig. 16 indicated by oblique lines is compared with the area in Fig. 6 corresponding to a conventional EDF, the difference between them is manifest. This means that an EDF according to the present invention differs greatly from a conventional EDF in characteristic.

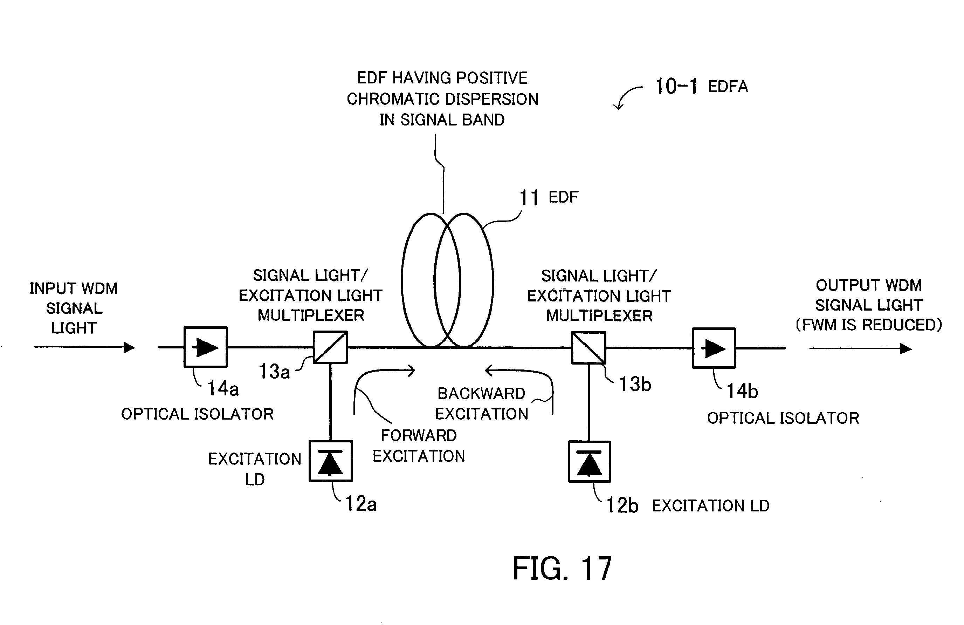

The structure of an EDFA having the characteristics of the EDF described above will now be described. Fig. 17 shows the structure of an EDFA. An EDFA 10-1 includes an EDF 11, excitation LDs 12a and 12b, multiplexers 13a and 13b, and optical isolators 14a and 14b.

The EDF 11 is an optical fiber fabricated by selecting a value between 3.9 and 6.3 pm, a value between 0.6 and 2.0, and a value between +5 and +15 ps/nm/km as the core diameter, the relative refractive index difference, and the chromatic dispersion, respectively.

For example, in the EDFA 10-1, the EDF 11 is long and WDM signal light with different wavelengths included in the L band is inputted. The WDM signal light inputted passes through the optical isolator 14a and travels to the EDF 11. An optical isolator is a device that transmits light only in the direction of an arrow shown in Fig. 17 and not in the reverse direction.

The excitation LDs 12a and 12b both emit excitation light. The excitation LD 12a performs forward excitation on the EDF 11 via the multiplexer 13a and the excitation LD 12b performs backward excitation on the EDF 11 via the multiplexer 13b. The amplified WDM signal light is outputted via the optical isolator 14b.

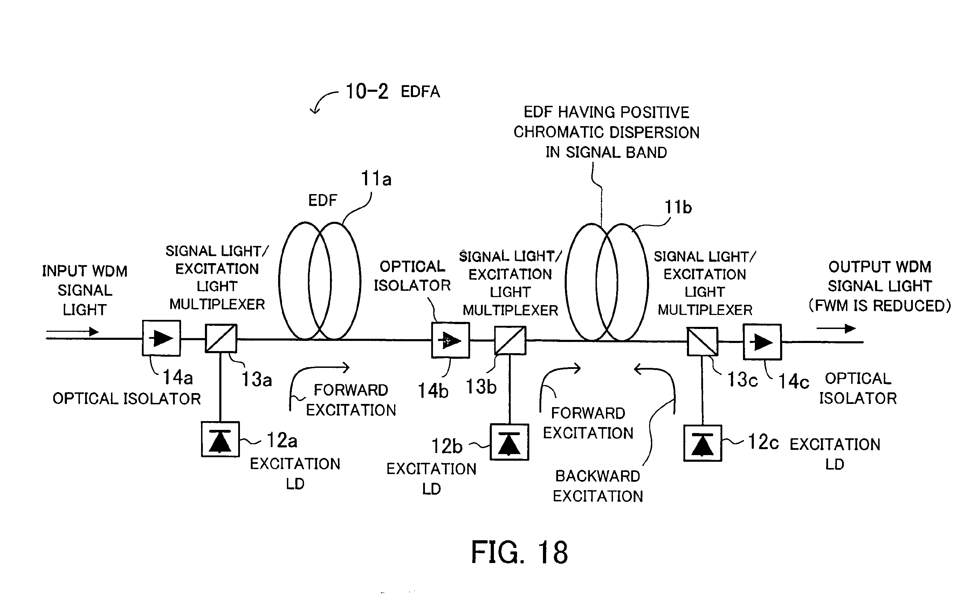

Fig. 18 shows the structure of an EDFA. An EDFA 10-2 includes EDFs 11a and 11b, excitation LDs 12a, 12b, and 12c, multiplexers 13a, 13b, and 13c, and optical isolators 14a, 14b, and 14c.

In EDFA 10-2, the EDFs 11a and 11b are located in series. The excitation LD 12a performs forward excitation on the EDF 11a at a first stage via the multiplexer 13a. The excitation LD 12b performs forward excitation on the EDF 11b at a second stage via the multiplexer 13b. The excitation LD 12c performs backward excitation on the EDF 11b at the second stage via the multiplexer 13c.

The EDF 11a at the first stage amplifies an input optical signal the power of which is lower than that of an optical signal inputted to the EDF 11b at the second stage. The EDF 11b at the second stage again amplifies the optical signal which has been amplified by the EDF 11a at the first stage, so the EDF 11b at the second stage amplifies the optical signal the power of which is higher than that of the optical signal inputted to the EDF 11a at the first stage. Accordingly, excitation light of high intensity is inputted to the EDF 11b at the second stage, so a nonlinear phenomenon tends to occur in the EDF 11b.

Therefore, to reduce FWM, a value between 3.9 and 6.3 $\mu$m, a value between 0.6 and 2.0, and a value between +5 and +15 ps/nm/km are selected as the core diameter, relative refractive index difference, and chromatic dispersion, respectively, of the EDF 11b at the second stage. (In the example shown in Fig. 18, the two EDFs are located in series. However, three or more EDFs may be located in series. In this case, if excitation light of the highest intensity is inputted to an EDF at a final stage, the EDF should have positive chromatic dispersion.)

The above descriptions of the optical amplifiers and the design method center on an EDF which is doped with $Er^{3+}$ and which is used as an optical amplification medium where FWM crosstalk is reduced. In recent years, however, an erbium-doped fluoride fiber (EDFF) in which host glass is changed from silica glass to fluoride glass and an erbium-doped Telluride fiber (EDTF) in which Telluride glass is used have been developed. These EDFF and EDTF should also have positive chromatic dispersion in accordance with the design policy described above in order to suppress FWM.

In addition, a thulium-doped fiber amplifier (TDFA) in which thulium (Tm) is used has been developed as an induced emission type optical amplifier which can amplify 1400-nanometer band signal. With this TDFA, a TDF should also have positive chromatic dispersion in accordance with the design policy described above in order to suppress FWM.

As has been described in the foregoing, with the optical amplifier according to the present invention an optical fiber used as an optical amplification medium has positive chromatic dispersion in a signal band and amplifies a wavelength division multiplex signal containing a plurality of wavelengths. As a result, four-wave mixing is effectively suppressed and wide-band high-output optical amplification can be performed. Therefore, the quality and reliability of WDM transmission can be improved.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

**Claims**

1. An optical amplifier comprising:

    an optical fiber having positive chromatic dispersion in a signal band and used as an optical amplification medium for amplifying a wavelength division multiplex signal; and
    an excitation section for inputting excitation light to the optical fiber.

2. The optical amplifier, according to claim 1, wherein the optical fiber has chromatic dispersion greater than or equal to +5 ps/nm/km and smaller than or equal to +15 ps/nm/km as an optical amplification medium for amplifying the wavelength division multiplex signal.

3. The optical amplifier according to claim 2, wherein the optical fiber has a core diameter larger than or equal to 3.9 $\mu$m and smaller than or equal to 6.3 $\mu$m and relative refractive index difference greater than or equal to 0.6 and smaller than or equal to 2.0 as an optical amplification medium for amplifying the wavelength division multiplex signal.

4. The optical amplifier according to claim 2, wherein:

    two or more optical fibers are located in series; and
    an optical fiber to which excitation light of highest intensity is inputted has positive chromatic dispersion in a signal band.

5. The optical amplifier according to claim 1, wherein:

    the optical fiber is an optical amplification medium for amplifying a wavelength division multiplex signal, is doped with a rare-earth element, and has positive chromatic dispersion for at least one signal; and
    the excitation section inputs excitation light to the optical fiber to amplify an optical signal with a wavelength between 1,570 and 1,605 nm.

6. The optical amplifier according to claim 5, wherein the optical fiber has chromatic dispersion greater than or equal to +5 ps/nm/km and smaller than or equal to +15 ps/nm/km as an optical amplification medium for amplifying the wavelength division multiplex signal.

7. An optical fiber for amplifying an optical signal in which a plurality of wavelengths are multiplexed, the fiber having positive chromatic dispersion in a signal band.

8. The optical fiber according to claim 7, wherein the optical fiber has chromatic dispersion greater than or equal to +5 ps/nm/km and smaller than or equal to +15 ps/nm/km.

9. The optical fiber according to claim 8, wherein the optical fiber has a core diameter larger than or equal to 3.9 $\mu$m and smaller than or equal to 6.3 $\mu$m and relative refractive index difference greater than or equal to 0.6 and smaller than or equal to 2.0.

10. An optical amplification medium design method for designing an optical amplification medium for amplifying an optical signal, the method comprising the steps of:

selecting positive chromatic dispersion in a signal band by which there is a great difference between a signal frequency, being a frequency of a signal to be amplified, and a zero-dispersion frequency, being a frequency at which chromatic dispersion is zero, for an optical fiber used as an optical amplification medium for amplifying a wavelength division multiplex signal by using excitation light in order to actualize mismatching of phases of optical signals with different wavelengths to be propagated;
finding a range of a core diameter and relative refractive index difference of the optical fiber within which a cutoff wavelength is smaller than the signal band and within which bend loss is smaller than or equal to a certain value;
finding a condition range which meets the condition of positive chromatic dispersion within the range; and
determining the core diameter, the relative refractive index difference, and chromatic dispersion within the condition range to reduce four-wave mixing.

11. The optical amplification medium design method according to claim 10, wherein the optical fiber has chromatic dispersion greater than or equal to +5 ps/nm/km and smaller than or equal to +15 ps/nm/km as an optical amplification medium for amplifying the wavelength division multiplex signal.

12. The optical amplification medium design method according to claim 11, wherein the optical fiber has a core diameter larger than or equal to 3.9 $\mu$m and smaller than or equal to 6.3 $\mu$m and relative refractive index difference greater than or equal to 0.6 and smaller than or equal to 2.0 as an optical amplification medium for amplifying the wavelength division multiplex signal.

10 OPTICAL AMPLIFIER

13 MULTIPLEXING
SECTION

11 OPTICAL FIBER
(WITH POSITIVE CHROMATIC
DISPERSION)

WDM SIGNAL
LIGHT

EXCITATION
LIGHT

AMPLIFIED WDM SIGNAL LIGHT
IN WHICH FOUR-WAVE MIXING
IS REDUCED

12 EXCITATION
SECTION

FIG. 1

FIG. 2

EP 1 737 087 A2

GLASS FIBER

1b CLADDING (n1)

1a CORE (n0)

COATING

1b CLADDING

1a CORE

INCIDENT ANGLE $\theta$ IS GREATEST
→ SINGLE MODE

$\theta$

CORE

FIG. 3

FIG. 4

FIG. 5

FIG. 6

FIG. 7

OPTICAL FIBER

λ1

λ2

λ3

λ1

λ2

λ3

λi

WHEN PHASES MATCH, FWM
OCCURS ( λi IS GENERATED)

FIG. 8

EP 1 737 087 A2

T1 TABLE

(WHEN SIGNAL WAVELENGTH $\lambda s = 1,590nm$
AND SIGNAL FREQUENCY $\nu s = 189THz$)

| CHROMATIC DISPERSION [ps/nm/km] | $\lambda 0$ [nm] | $\Delta \lambda$ [nm] | $\nu 0$ [THz] | $\Delta \nu$ [THz] |
|---|---|---|---|---|
| a ~ -20 | 2257 | -667 | 133 | 56 |
| -15 | 2090 | -500 | 143 | 45 |
| -10 | 1923 | -333 | 156 | 33 |
| b ~ -5 | 1757 | -167 | 171 | 18 |
| 0 | SIGNAL WAVELENGTH 1590 | 0 | 189 | 0 |
| 5 | 1423 | 167 | 211 | -22 |
| 10 | 1257 | 333 | 239 | -50 |
| 15 | 1090 | 500 | 275 | -86 |
| 20 | 923 | 667 | 325 | -136 |

* DISPERSION SLOPE: 0.03 [ps/nm²/km]

FIG. 9

22

FIG. 10

20 EDFA

EDF (L=60m)

AVERAGE INPUT POWER
−10 dBm/ch

AVERAGE OUTPUT POWER
+10 dBm/ch

INPUT SIGNAL LIGHT

1580.35 ~ 1597.19 nm
TWENTY-ONE
WAVELENGTHS
SET AT INTERVALS
OF 100GHz

21

1.47/1.58 μm
MULTIPLEXER

1.47/1.58 μm
MULTIPLEXER

OUTPUT SIGNAL
LIGHT

23a

23b

P1

P2

1.47 μm
EXCITATION LD

22a

FORWARD
EXCITATION

BACKWARD
EXCITATION

22b

1.47 μm
EXCITATION LD

FIG. 11

FIG. 12

FIG. 13

FIG. 14

FIG. 15

FIG. 16

EDF HAVING POSITIVE CHROMATIC DISPERSION IN SIGNAL BAND

10-1 EDFA

11 EDF

INPUT WDM SIGNAL LIGHT

SIGNAL LIGHT/ EXCITATION LIGHT MULTIPLEXER

SIGNAL LIGHT/ EXCITATION LIGHT MULTIPLEXER

OUTPUT WDM SIGNAL LIGHT (FWM IS REDUCED)

13a

14a

OPTICAL ISOLATOR

BACKWARD EXCITATION

FORWARD EXCITATION

13b

14b

OPTICAL ISOLATOR

EXCITATION LD

12a

12b  EXCITATION LD

FIG. 17

FIG. 18

EP 1 737 087 A2

FIG. 19

FIG. 20

FIG. 21

FIG. 22

FIG. 23

FIG. 24

FIG. 25

EP 1 737 087 A2

FIG. 26

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004079876 A